(19) Europäisches Patentamt
European Patent Office
Office européen des brevets

(11) **EP 1 505 717 A1**

(12) **EUROPEAN PATENT APPLICATION**
published in accordance with Art. 158(3) EPC

(43) Date of publication:
**09.02.2005 Bulletin 2005/06**

(51) Int Cl.⁷: **H02P 5/00**, E02F 9/22,
B66C 23/84

(21) Application number: **03725634.4**

(22) Date of filing: **23.04.2003**

(86) International application number:
**PCT/JP2003/005138**

(87) International publication number:
**WO 2003/096522 (20.11.2003 Gazette 2003/47)**

(84) Designated Contracting States:
**AT BE BG CH CY CZ DE DK EE ES FI FR GB GR
HU IE IT LI LU MC NL PT RO SE SI SK TR**

(30) Priority: **13.05.2002 JP 2002136967**

(71) Applicants:
• **KOBELCO CONSTRUCTION MACHINERY CO.,
LTD.**
**Hiroshima-shi, Hiroshima 731-0138 (JP)**
• **Kabushiki Kaisha Kobe Seiko Sho**
**Kobe-shi, Hyogo 651-8585 (JP)**

(72) Inventors:
• **SUGANO, Naoki,**
**c/o Kobe Corporate Research Lab.**
**Kobe-shi, Hyogo 651-2271 (JP)**

• **YOSHIMATSU, Hideaki,**
**Kobe Corporate Research Lab.**
**Kobe-shi, Hyogo 651-2271 (JP)**
• **UEJIMA, Mamoru,**
**Okubo Plant in KOBELCO CONSTRUC.**
**Akashi-shi, Hyogo 674-0063 (JP)**
• **INOUE, Koji, Kobe Corporate Research Lab.**
**Kobe-shiHyogo 651-2271 (JP)**

(74) Representative: **Bailey, David Martin**
**Brookes Batchellor LLP,**
**102-108 Clerkenwell Road**
**London EC1M 5SA (GB)**

(54) **ROTATINGLY DRIVING DEVICE OF CONSTRUCTION MACHINERY**

(57)    In a construction machine comprising an electric motor 6 for driving a rotational system, an operating member for instructing an operation of the electric motor 6, and a controller 9 for controlling the electric motor 6 according to an operation command from the operating member, the controller 9 has an emulation model 9a for simulating dynamic characteristics of a hydraulic rotation driving device in real time, and a target value for control is calculated from the emulation model 9a according to the operation command from the operating member to control the electric motor 6. Accordingly, the electric motor can mildly respond to the operation of a lever in an intermediate range and swiftly respond to a quick operation of the lever.

FIG.3

## Description

TECHNICAL FIELD

The present invention relates to a rotation driving device for a construction machine, which uses an electric motor to drive a rotational system.

BACKGROUND ART

Conventionally, a hydraulic actuator is extensively adapted, in general, as an actuator of a construction machine. However, a hydraulic driving system using the hydraulic actuator has a low energy efficiency due to generation of resistance in a control valve for controlling the direction and flow rate of pressure oil discharged from a hydraulic pump, generation of a pressure loss in pipes, generation of an excessive flow in a circuit and the like.

In order to enhance the energy efficiency, thus, it is known to use an electric motor as the actuator.

In a "turning drive device for construction machine" described in Japanese Patent Application Laid-Open No. 2001-11897, for example, the electric motor is used as a rotating motor for rotating an upper rotating body.

However, in the use of the electric motor as the actuator of the construction machine, responsiveness of the actuator to a lever operation becomes too sensitive, compared with the hydraulic driving system, although the energy efficiency can be improved.

When the lever is operated in an intermediate range to change the speed of the electric motor, for example, the electric motor is suddenly changed in speed, consequently causing hunting or shock.

In case of driving a front attachment by use of the electric motor, a sudden stop of the electric motor might cause elastic deformation of the attachment, which in turn leads to a swing-back. In this way, such an excessive sensitive responsiveness of the actuator to the drive of the electric motor inconveniently deteriorates the operability rather than in the hydraulic driving system.

To solve such a problem, model follow-up control that is a known technique can be applied. This technique comprises controlling the actuator, for example, by use of a normal model such as a primary delay, which can provide an intended responsiveness, so as to follow up the responsiveness of the normal model.

However, in such a general model follow-up control, a fixed response delay regularly appears to a lever operation because a linear model such as a simple primary delay is used as the normal model. Consequently, there still remains the problem that a delay also accompanies a sudden operation, which disables a quick acceleration or quick stopping.

Further, in such a simple linear model, the operability cannot be delicately tuned according to an operator's taste.

DISCLOSURE OF THE INVENTION

The present invention has been attained considering the problems in a conventional actuator driving device as described above. Accordingly, an object of the present invention is to provide a rotation driving device for a construction machine for driving a rotational system by use of an electric motor, which can mildly respond to operation of a lever in an intermediate range, and swiftly respond to a quick operation of the lever.

The present invention provides a rotation driving device for a construction machine comprising an electric motor for driving a rotational system of the construction machine, an operating member for instructing an operation of the electric motor, and a controller for controlling the electric motor according to an operation command from the operating member, wherein the controller has an emulation model for simulating dynamic characteristics of a hydraulic rotation driving device in real time, and a control target value as target value for control is calculated from the emulation model according to the operation command from the operating member to control the electric motor.

According to the present invention, when the operating member is operated, the controller simulates, as dynamic characteristics of the hydraulic rotation driving device, for example, revolving speed or driving torque, or the both thereof in real time in reference to the emulation model to compute the control target value. The controller then controls the electric motor, targeting for the control target value, for example, by speed control or torque control, or the both thereof. Accordingly to this, even in case of driving the rotational system by the electric motor, the responsiveness to the operation of the operating member can be made almost equal to that in the hydraulic driving system.

In the present invention, the emulation model preferably has specifications of a hydraulic pump, a hydraulic actuator and various valves as hydraulic equipment individually.

In the present invention, an input unit is preferably connected to the controller, so that each specification in the emulation model can be changed through the input unit. Accordingly to this, the operability can be tuned delicately according to an operator's taste.

In the present invention, the emulation model preferably has nonlinear characteristic of a flow control valve or pressure control valve as a valve.

This nonlinear characteristic enables generation of a proper response delay, in case of operating a lever as an operating member in an intermediate range, to prevent generation of hunting, swing-back or shock, and also enables a quick acceleration or quick stopping, in case of quickly operating the lever, without almost generating a response delay.

In the present invention, as the power source of the construction machine, any one or two or more of an external power source, a built-in battery, an electric motor driven by an engine, and a capacitor are selected.

In the present invention, the construction machine may have, as the rotational system, concretely, at least one of a rotating system with a rotating motor as driving source, a hoisting system with a winch motor as driving source, and a traveling system with a traveling motor as driving source.

BRIEF DESCRIPTION OF THE DRAWINGS

Fig. 1 is an apparent view of a hydraulic excavator to which a rotation driving device of the present invention is applied;

Fig. 2 is an illustrative view showing the configuration of the rotation driving device of the present invention;

Fig. 3 is an illustrative view showing a control flow according to the present invention;

Fig. 4 comprises (a) and (b) which are a circuit view showing the configuration of an emulation model shown in Fig. 3, and a table showing each valve characteristic in the same model, respectively;

Fig. 5 is an illustrative view showing a conventional control flow;

Fig. 6 is a graph showing one example of an operation pattern by a conventional control;

Fig. 7 is a graph showing the speed response waveform of an electric motor by the conventional control;

Fig. 8 is a graph showing the speed response characteristic of the electric motor by the control according to the present invention;

Fig. 9 is a graph showing another example of the operation pattern by a control lever;

Fig. 10 is a graph showing the speed response characteristic of the electric motor according to the present invention to the operation pattern of Fig. 9; and

Fig. 11 is an illustrative view showing another control flow according to the present invention.

BEST MODE FOR CARRYING OUT THE INVENTION

The present invention will be described below in detail based on preferred embodiments shown in the drawings.

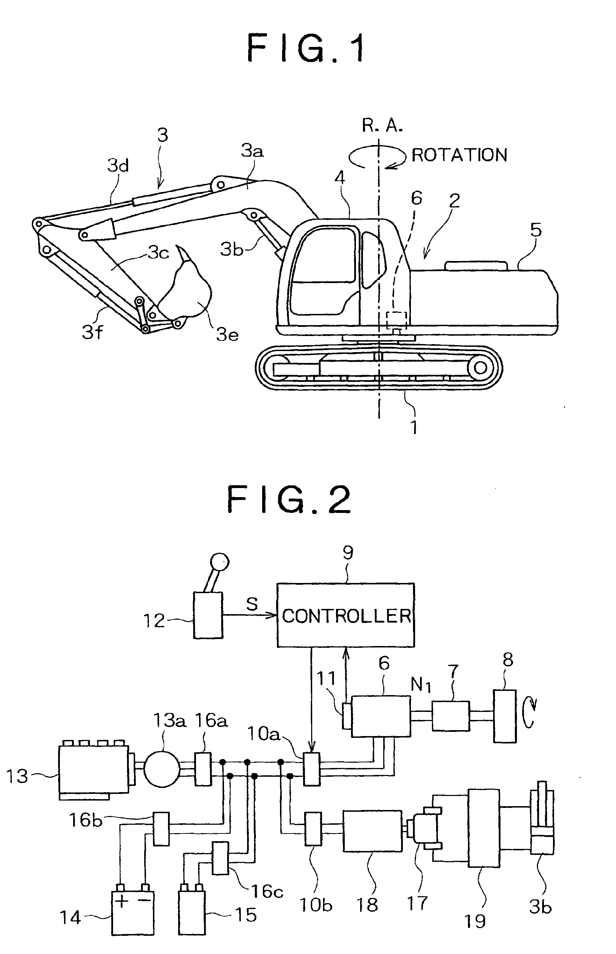

Fig. 1 shows a hydraulic excavator as a construction machine to which an actuator driving device of the present invention is applied.

In this figure, the hydraulic excavator comprises an upper rotating body 2 mounted on a lower traveling body 1, and the upper rotating body 2 is adapted to be rotatable around a rotating axis R.A.

A front attachment 3 is provided on the front part of the upper rotating body 2. The front attachment 3 comprises a boom 3a, a boom cylinder 3b for raising and lowering the boom 3a, an arm 3c, an arm cylinder 3d for rotating the arm 3c, a bucket 3e and a bucket cylinder 3f for rotating the bucket 3e.

A cabin 4 is disposed on the left side of the base end of the front attachment 3. An engine, hydraulic equipment, a tank and the like (not shown) are disposed in the rear of the cabin 4, and covered with an equipment cover 5.

Denoted at 6 is an electric motor for rotating the upper rotating body 2, which is composed of an AC servomotor. The electric motor 6 may be composed of a DC servomotor. The electric motor 6 is used as the driving source of a rotating mechanism (rotating system) for rotating the upper rotating body 2.

Fig. 2 shows the configuration of a rotation driving device unit on the hydraulic excavator.

A reduction gear 7 is connected to the output shaft of the electric motor 6, and an inertial load (concretely, a rotator, a winch, a traveling body or the like as a rotational system) 8 is connected to the rotating shaft of the reduction gear 7.

A controller 9 is adapted so as to give a revolution signal to an inverter 10a. The inverter 10a controls a rotation of the electric motor 6, and an encoder 11 detects the revolution of the electric motor 6, and feeds the detected revolution back to the controller 9 as a signal.

Denoted at 12 is a control lever (operating member), which is to be operated by an operator to control the revolving speed of the electric motor 6.

As a power supplying source for driving the electric motor 6, a generator 13a driven by an engine 13, a battery 14, a capacitor 15 and the like are used in combination. Denoted at 16a is a converter for converting alternating current to direct current, and 16b and 16c are DC-DC converters for increasing or lowering the voltage.

In this embodiment, the configuration is adapted to mount the generator 13 on the hydraulic excavator and store electricity in the battery 14. However, the configuration can be adapted to receive supply of electric power from an external power source.

Denoted at 3b is the boom cylinder, which is shown as one actuator of the front attachment 3.

Denoted at 17 is a hydraulic pump for supplying pressure oil to the boom cylinder 3b, and 18 is the other electric motor for driving the hydraulic pump 17. Denoted at 19 is a hydraulic circuit for adjusting the speed and pressure of the boom cylinder 3b, and 10b is an inverter.

The boom cylinder 3b is driven by the pressure oil supplied from the hydraulic circuit 19. Accordingly, the other electric motor 18 is not adapted to drive the rotational system.

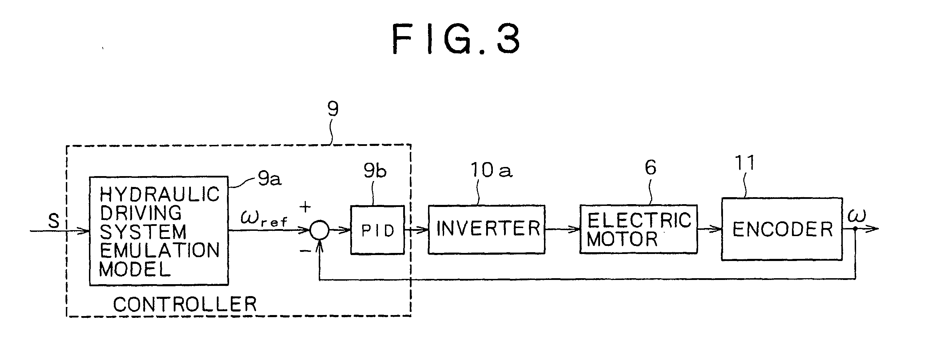

A control flow in the controller 9 will be described in reference to Fig. 3.

The controller 9 computes or calculates, on receipt of a manipulated variable S of a control lever 12, an actuator revolving speed $\omega_a$ in case of a hydraulic driving system with the manipulated variable given by use of a hydraulic driving system emulation model 9a stored therein.

A speed target value $\omega_{ref}$ of the electric motor is determined from the computed revolving speed $\omega_a$ by use of the following equation.

$$\omega_{ref} = \omega_a \times N_1/N_2 \qquad (1)$$

wherein $N_1$ is the speed reduction ratio of the electric motor system, and $N_2$ is the speed reduction ratio of the hydraulic system.

By using this $\omega_{ref}$ as the speed target value of the electric motor 6, PID control is carried out by a PID 9b followed by comparison with the revolving speed $\omega$ determined from the encoder 11, whereby speed feedback control is carried out.

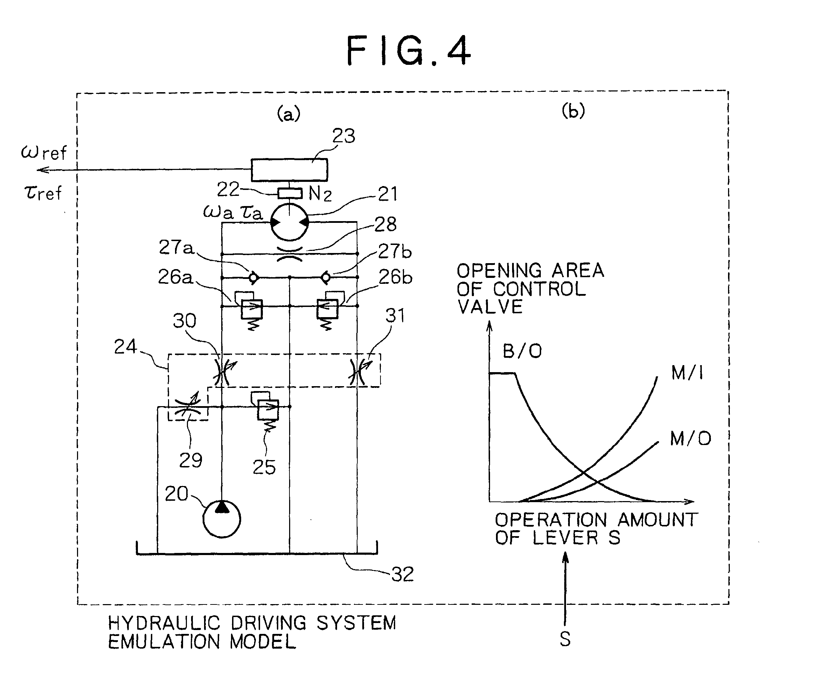

The content of the hydraulic driving system emulation model is shown in Fig. 4(a).

In Fig. 4(a), the emulation model mainly comprises a hydraulic pump 20, a hydraulic motor 21, a reduction gear 22 connected to the output shaft of the hydraulic motor 21, a rotating inertia 23 connected to the rotating shaft of the reduction gear 22, a control valve 24 for supplying the pressure oil discharged from the hydraulic pump 20 to the hydraulic motor 21 while controlling its flow rate and direction, a main relief valve 25, port relief valves 26a, 26b, check valves 27a and 27b, and a bypass valve 28. This figure shows a principal view for normally rotating the hydraulic motor 21.

The control valve 24 comprises a bleed-off valve (B/O) 29, a meter-in valve (M/I) 30, and a meter-out valve (M/O) 31. Denoted at 32 is a tank.

In the emulation model, as shown in Fig. 4 (b), a bleed-off opening (the curve shown by B/O of the same figure) is throttled as the lever manipulated variable S becomes larger. Contrary to this, a meter-in opening (the curve shown by M/I of the same figure) and a meter-out opening (the curve shown by M/O of the same figure) are opened. Consequently, the pressure oil flow rate to be supplied to the hydraulic motor 21 is increased.

The governing equations of this emulation model are shown below.

$$J_L(2\pi/qN_2)\,\omega_a = P_{mi} - P_{mo} \qquad (2)$$

$$P_{mi} = K/V_{mi}(Q_{mi} - Q_a - Q_{r1} + Q_{c1}) \qquad (3)$$

$$P_{mo} = K/V_{mo}(Q_{a} - Q_{mo} - Q_{r2} + Q_{c2}) \qquad (4)$$

$$P_p = K/V_p(Q_p - Q_{bo} - Q_{mi} - Q_{rp}) \qquad (5)$$

$$A_{bo} = f_{bo}(S),\ A_{mi} = f_{mi}(S),\ A_{bo} = f_{bo}(S) \qquad (6)$$

$$Q_{bo} = C_v A_{bo}\sqrt{(2P_p/\gamma)} \qquad (7)$$

$$Q_{mi} = C_v A_{mi}\sqrt{(2(P_p - P_{mi})/\gamma)} \qquad (8)$$

$$Q_{mo} = C_v A_{mo}\sqrt{(2P_{mo}/\gamma)} \qquad (9)$$

$$Q_a = qN\omega_a/2\pi \qquad (10)$$

Wherein $J_L$: inertial moment of load, P: pressure, Q: flow rate, K: oil volume elasticity, V: pipe inner capacity, A: area, L: length, $C_v$: flow coefficient, $\gamma$: oil specific gravity, $\lambda$: friction coefficient of pipe, D: pipe diameter, S: lever manipulated variable, N: reduction ratio of speed, q: hydraulic motor capacity, c; check valve, r: port relief valve, rp: main relief valve, pi: pipe part, 1: upstream side, and 2: downstream side.

In the above equations, as the specification of the hydraulic pump 20 that is the hydraulic pressure source, hydraulic pump flow rate $Q_p$ is given to the equation (5).

As the characteristic of the actuator, hydraulic motor capacity q is given to the equation (2).

As the characteristic of the control valve 24, the relation of each opening area $A_{bo}$, $A_{mi}$, $A_{mo}$ of the bleed-off valve 29, meter-in valve 30, and meter-out valve respectively constituting the control valve 24 with the lever manipulated variable S is given to the equation (6).

In the emulation model of this embodiment, a numerical integration method, for example, the Newmark-$\beta$ method is applied to the system of these governing equations, whereby time history response operation is carried out.

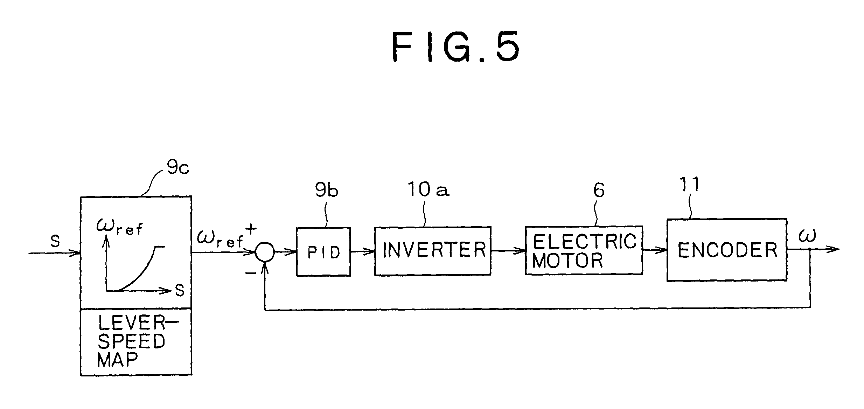

The operation of the emulation model will be described in reference to Figs. 5-10.

Fig. 5 shows, as a comparative example, a conventional general control method for determining a speed target value to the lever manipulated variable by use of a map 9c to perform a speed feedback control.

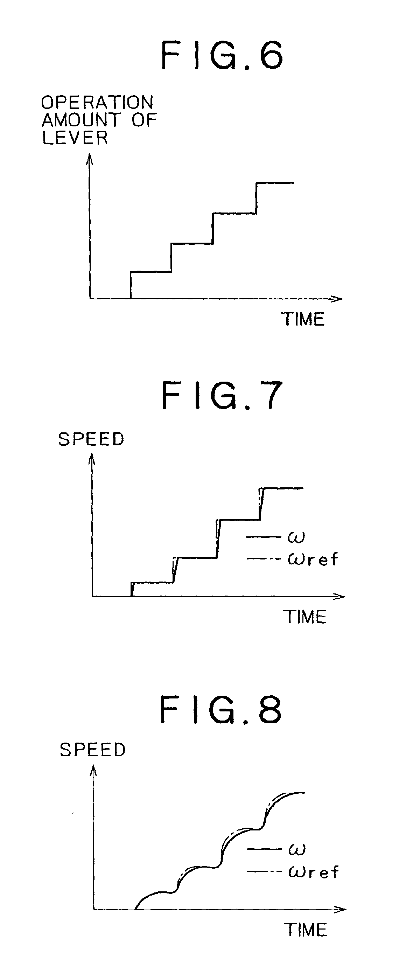

In this case, as shown in the operation example of Fig. 6, the lever is operated stepwise in an intermediate range, the speed target value $\omega_{ref}$ changes steeply relative to the lever operation as shown in Fig. 7.

Therefore, the revolving speed $\omega$ of the electric motor 6 also changes steeply to make the responsiveness too sensitive. Consequently, hunting, swing-back in stopping, or shock is generated to deteriorate the operability.

In contrast to this, in the control method of this embodiment, the control is performed so as to simulate the dynamic characteristic of the hydraulic driving device by use of the emulation model.

Accordingly, when the lever is operated stepwise in the intermediate range, the speed target value $\omega_{ref}$ draws a waveform as simulates the delay characteristic peculiar to the hydraulic driving device to the lever operation as shown in Fig. 8.

Consequently, the speed change of the electric motor 6 to the lever operation is moderated (refer to $\omega$ of the graph) , and the operability can be improved without causing the hunting, swing-back in stoppage, or shock.

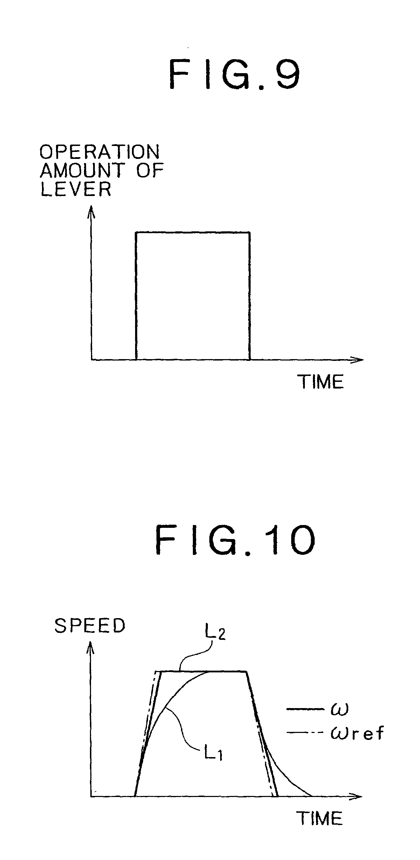

On the other hand, in case of a quick accelerating or quick decelerating operation, the response delay appears in a conventional model follow-up control using primary delay, as shown in Fig. 10, similarly to the lever operation in the intermediate range (refer to $L_1$).

In contrast, in the control method of this embodiment, since the relief valves 26a, 26b (refer to Fig. 4 (a) ) for keeping the circuit pressure constant are included in the emulation model, acceleration and deceleration are carried out at the maximum torque similarly to the case of the hydraulic driving device (refer to $L_2$) .

According to the control method of this embodiment, thus, the electric motor 6 mildly responds to a lever operation in the intermediate range, while the electric motor 6 can be made to rapidly respond to a quick lever operation.

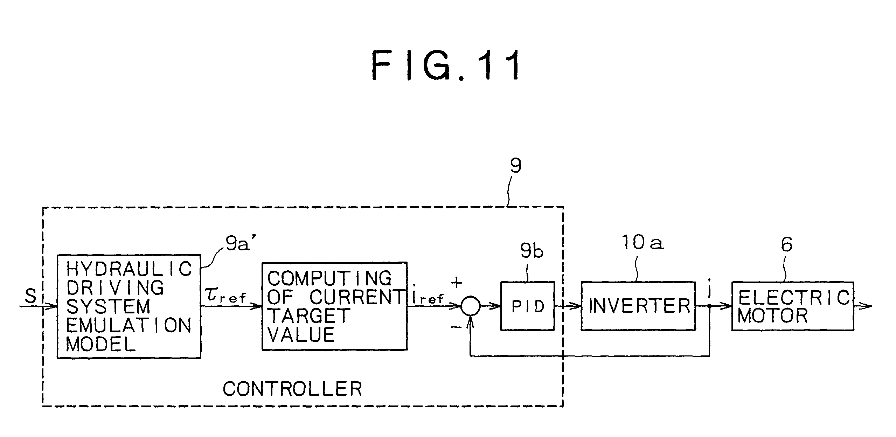

In the emulation model described above, the target rotating speed $\omega_{ref}$ is compared with the rotating speed $\omega$ outputted from the encoder 11. However, without being limited to this, toques can be mutually compared by use of a hydraulic driving system emulation model 9a' shown in Fig. 11.

Namely, the driving torque of the hydraulic actuator with a lever manipulated variable given is as follows:

$$\tau_{ref} = \tau_a \times N_1/N_2$$

The same effect as the above embodiment can be obtained by performing a feedback control using the control rule of the PID control with the $\tau_{ref}$ as the torque target value of the electric motor 6. Concretely, a current target value $i_{ref}$, which is obtained by converting the torque target value $\tau_{ref}$ to current value is compared with current i determined from the inverter 10a.

A switch or touch panel as the input unit may be connected to the controller 9, so that the specification of, for example, the control valve 24 in the emulation model can be properly changed by switching operation of the switch, an operation on the touch panel, or a change of software.

Such a changeable configuration enables an operator to easily change the characteristic of the operability according to the operator's taste.

INDUSTRIAL APPLICABILITY

The present invention is useful for a construction machine for driving a rotational system by an electric motor, and particularly suitable for a construction machine in which responsiveness equal to a hydraulic driving system is required for the responsiveness of an actuator to a lever operation.

**Claims**

1. A rotation driving device for a construction machine comprising an electric motor for driving a rotational system of said construction machine, an operating member for instructing an operation of said electric motor, and a controller for controlling said electric motor according to an operation command from said operating member,
   wherein said controller has an emulation model for simulating dynamic characteristics of a hydraulic rotational driving device in real time, and a target value for control is calculated by use of said emulation model according to the operation command from said operating member to control said electric motor.

2. The rotation driving device for the construction machine according to claim 1, wherein said emulation model individually has specifications of a hydraulic pump, a hydraulic actuator and various valves as hydraulic equipment.

3. The rotation driving device for the construction machine according to claim 2, wherein an input unit is connected to said controller, so that each of said specifications in said emulation model is changed through said input unit.

4. The rotation driving device for the construction machine according to claim 2, wherein said emulation model has nonlinear characteristic of a flow control valve or pressure control valve as said valve.

5. The rotation driving device for the construction machine according to claim 1, wherein either one or two or more of an external power source, a built-in battery, a generator driven by an engine and a capacitor are selected as a power source of said electric motor.

6. The rotation driving device for the construction machine according to claim 1, wherein said rotational system includes at least one of a rotating system having a rotating motor as driving source, a hoisting system with a winch motor as driving source, and a traveling system with a traveling motor as driving source.

# F I G . 1

# F I G . 2

FIG.3

# FIG.4

(a)

$\omega_{ref}$
$\tau_{ref}$

$\omega_a\ \tau_a$

23
22 — N₂ — 21
28
27a — 27b
26a — 26b
30 — 31
24
29
25
20
32

(b)

OPENING AREA
OF CONTROL
VALVE

B/O

M/I

M/O

OPERATION AMOUNT
OF LEVER S

S

HYDRAULIC DRIVING SYSTEM
EMULATION MODEL

EP 1 505 717 A1

# FIG.5

EP 1 505 717 A1

# FIG.6

# FIG.7

# FIG.8

# FIG.9

# FIG.10

FIG.11

## INTERNATIONAL SEARCH REPORT

| | International application No. |
|---|---|
| | PCT/JP03/05138 |

A.  CLASSIFICATION OF SUBJECT MATTER
    Int.Cl⁷  H02P5/00, E02F9/22, B66C23/84

According to International Patent Classification (IPC) or to both national classification and IPC

B.  FIELDS SEARCHED

Minimum documentation searched (classification system followed by classification symbols)
    Int.Cl⁷  H02P5/00, E02F9/22, B66C23/84

Documentation searched other than minimum documentation to the extent that such documents are included in the fields searched
    Jitsuyo Shinan Koho          1926–1996   Toroku Jitsuyo Shinan Koho    1994–2003
    Kokai Jitsuyo Shinan Koho    1971–2003   Jitsuyo Shinan Toroku Koho    1996–2003

Electronic data base consulted during the international search (name of data base and, where practicable, search terms used)
    WPI

C.  DOCUMENTS CONSIDERED TO BE RELEVANT

| Category* | Citation of document, with indication, where appropriate, of the relevant passages | Relevant to claim No. |
|---|---|---|
| Y | JP 2001-11897 A  (Kobe Steel, Ltd.), 16 January, 2001 (16.01.01), (Family: none) | 1-6 |
| Y | EP 1193160 A2  (NISSAN MOTOR CO., LTD.), 03 April, 2002 (03.04.02), & US 2002/0040265 A   & JP 2002-104221 A | 1-6 |
| Y | US 6304835 B1  (Mazda Motor Corp.), 16 October, 2001 (16.10.01), & JP 11-282897 A | 1-6 |
| A | JP 2002-62230 A  (Saginomiya Seisakusho, Inc.), 28 February, 2002 (28.02.02), (Family: none) | 1-6 |

☐ Further documents are listed in the continuation of Box C.       ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 27 June, 2003 (27.06.03) | 08 July, 2003 (08.07.03) |

| Name and mailing address of the ISA/ | Authorized officer |
|---|---|
| Japanese Patent Office | |
| Facsimile No. | Telephone No. |

Form PCT/ISA/210 (second sheet) (July 1998)